Europäisches Patentamt

European Patent Office

Office européen des brevets

(11) Veröffentlichungsnummer: **0 361 000**
**A2**

(12) **EUROPÄISCHE PATENTANMELDUNG**

(21) Anmeldenummer: **89113256.5**

(22) Anmeldetag: **19.07.89**

(51) Int. Cl.5: **H04N 3/15**

(30) Priorität: **29.09.88 DE 3833159**

(43) Veröffentlichungstag der Anmeldung:
**04.04.90 Patentblatt 90/14**

(84) Benannte Vertragsstaaten:
**DE FR GB NL**

(71) Anmelder: **Siemens Aktiengesellschaft**
**Wittelsbacherplatz 2**
**D-8000 München 2(DE)**

(72) Erfinder: **Mader, Gerhard, Dr.**
**Haupstrasse 47**
**D-8025 Unterhaching(DE)**
Erfinder: **Kleinschmidt, Peter, Dipl.-Phys.**
**Klagenfurter Strasse 12**
**D-8000 München 80(DE)**

(54) **Optische Sensorzeile aus amorphen oder polykristallinem photo-elektrischem Material mit einer Vielzahl von Sensorelementen.**

(57) Eine optische Sensorzeile aus amorphem oder polykristallinem photoelektrischem Material mit einer Vielzahl von Sensorelementen, bei der vorgesehen ist, daß jedem Sensorelement (1) ein nichtlineares Element als Konverter (2) zugeordnet ist, der den der einfallenden Lichtmenge proportionalen Photostrom ($i_{ph}$) in eine Signalspannung ($u_s$) umwandelt, die zumindest näherungsweise dem Logarithmus des Photostroms ($i_{ph}$) proportional ist.

FIG 1

Logarithmierer in
Serie zum Photosensor

EP 0 361 000 A2

## Optische Sensorzeile aus amorphem oder polykristallinem photoelektrischem Material mit einer Vielzahl von Sensorelementen

Die vorliegende Erfindung betrifft eine optische Sensorzeile aus amorphem oder polykristallinem photoelektrischem Material mit einer Vielzahl von Sensorelementen.

Die Photoströme von optischen Sensoren steigen näherungsweise linear mit zunehmender Beleuchtungsstärke an, während das menschliche Auge Helligkeiten logarithmisch in Graustufen einteilt. Daraus folgt, daß im dunklen Bereich wesentlich mehr Graustufen in einem vorgegebenen Photostromintervall liegen als im hellen Bereich.

Beim Auslesen von optischen Abtastzeilen mit amorphen Halbleitersensoren besteht bei hoher Dynamik folgendes Störproblem:

Kleine Signale, die beispielsweise um den Faktor 1000 kleiner sind als das Maximum der zu verarbeitenden Signale, gehen in Schalt- und Störsignalen unter. Deshalb ergibt eine lineare Verarbeitung der Photoströme im dunklen Bereich eine geringe Graustufenauflösung.

Diese Probleme wurden bisher durch eine optimale Leitungsführung, durch eine Vorverstärkung mit hohen Pegeln und niedrigen Ausgangswiderständen und/oder durch eine Störaustastung teilweise verringert.

Um eine digitale Datenübertragung der Graustufen mit hoher Auflösung im dunklen Bereich zu gewährleisten, ergibt sich im hellen Bereich eine überflüssig große Anzahl von Graustufen, wenn die Graustufen-Einteilung wie bisher üblich linear erfolgt.

Der vorliegenden Erfindung liegt die Aufgabe zugrunde, eine optische Sensorzeile der eingangs genannten Art und gemäß dem Oberbegriff des Patentanspruchs 1 zu schaffen, die den Nachteil einer geringen Graustufenauflösung im dunklen Bereich vermeidet und außerdem die für eine digitale Datenübertragung und/oder -verarbeitung der Grauwerte benötigte Bitzahl minimiert.

Die genannte Aufgabe für die vorliegende Erfindung wird durch eine optische Sensorzeile gemäß dem Oberbegriff des Patentanspruchs 1 gelöst, die erfindungsgemäß dadurch gekennzeichnet ist, daß jedem Sensorelement ein nichtlineares Element als Konverter zugeordnet ist, der den der einfallenden Lichtmenge proportionalen Photostrom in eine Signalspannung umwandelt, die zumindest näherungsweise dem Logarithmus des Photostroms proportional ist.

Vorteilhafte weiterbildungen der Erfindung sind durch die in den Unteransprüchen angegebenen Merkmale gekennzeichnet.

Im folgenden wird die Erfindung anhand mehrerer, bevorzugte Ausführungsbeispiele für die vorliegende Erfindung betreffender Figuren im einzelnen erläutert.

Die Figuren 1 bis 7 zeigen jeweils die Schaltung für ein Sensorelement stellvertretend für eine komplette Sensorzeile.

Fig. 1 zeigt ein erstes Ausführungsbeispiel für die vorliegende Erfindung mit einem Sensorelement, einem diesem zugeordneten Konverter und einem Operationsverstärker.

Fig. 2 zeigt ein weiteres Ausführungsbeispiel mit einem Sensorelement, einem Operationsverstärker und einem in einen Rückkopplungszweig des Operationsverstärkers eingefügten Konverter.

Fig. 3 zeigt ein weiteres Ausführungsbeispiel für die vorliegende Erfindung mit einem Sensorelement, das in sich die Funktion des Konverters aufweist, und einem Operationsverstärker.

Fig. 4 a, b, c, d zeigen jeweils verschiedene Ausführungsarten für gemäß der Erfindung zu verwendende Konverter.

Fig. 5 zeigt ein erstes Ausführungsbeispiel für eine Schaltungsanordnung, die je Sensorelement vorgesehen ist.

Fig. 6 zeigt ein zweites Ausführungsbeispiel für eine Schaltungsanordnung, die je Sensorelement vorgesehen ist.

Fig. 7 zeigt ein drittes Ausführungsbeispiel für eine Schaltungsanordnung, die je Sensorelement vorgesehen ist.

Fig. 8 zeigt ein bevorzugtes Ausführungsbeispiel für eine Schaltungsanordnung mit Temperaturkompensation für eine Sensorzeile mit n Sensorelementen.

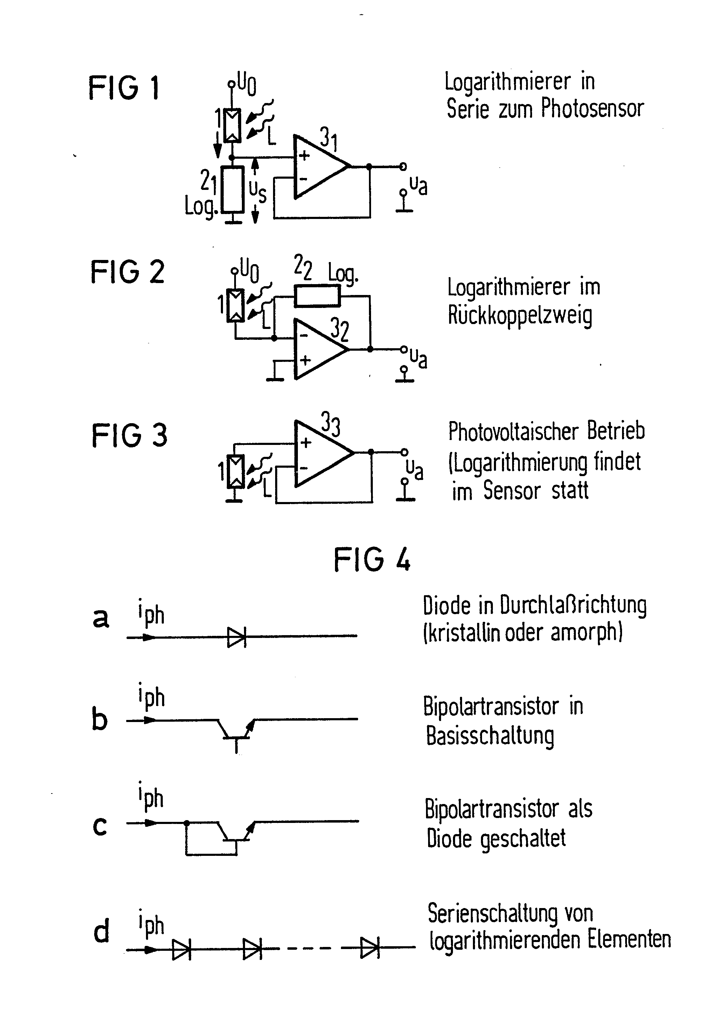

Wie bereits erläutert, zeigt Fig. 1 ein erstes Ausführungsbeispiel für die vorliegende Erfindung mit einem Sensorelement 1, einem diesem zugeordneten Konverter 2 und einem Operationsverstärker 3. Das Sensorelement 1 ist mit einem seiner Anschlüsse an eine Versorgungsspannungsklemme $U_0$ angeschlossen. Sein anderer Anschluß ist sowohl mit dem positiven Eingang des Operationsverstärkers 3 als auch mit einem ersten Anschluß des Konverters 2 verbunden, dessen zweiter Anschluß auf Erdpotential liegt. Einfallendes Licht L bewirkt, daß das Sensorelement 1 einen Photostrom $i_{ph}$ ausgibt, der durch den Konverter 2 gegen Erde fließt. Aufgrund der U-I-Kennlinie des Konverters 2 entsteht über dem Konverter 2 eine Signalspannung $u_s$, die zumindest näherungsweise dem Logarithmus des Photostroms $i_{ph}$ proportional ist, der seinerseits der einfallenden Lichtmenge proportional ist.

Der Operationsverstärker steht als Beispiel für einen Impedanzwandler, der die Signalspannung am Ausgang mit praktisch gegenüber dem Eingangssignal unverändertem Pegel, jedoch wesentlich niedrigerem Ausgangswiderstand zur Verfügung stellt.

Das Sensorelement ist vorzugsweise aus amorphem Silizium a-Si:H hergestellt. Als Konverter 2 kann ein solcher verwendet werden, dessen logarithmische U-I-Kennlinie durch einen p-n-Übergang in einem einkristallinen Halbleitermaterial bestimmt ist. Der Konverter 2 kann jedoch auch die logarithmische U-I-Kennlinie eines p-n-Übergangs in einem polykristallinen Halbleitermaterial ausnutzen. Schließlich kann gemäß einer Weiterbildung der Erfindung auch vorgesehen sein, daß der Konverter 2 die nichtlineare U-I-Kennlinie einer Schichtfolge von einer oder mehreren Schichten aus amorphem Material und der betreffenden Elektrode oder den betreffenden Elektroden ausnutzt.

In der beschriebenen Schaltungsanordnung gemäß dem ersten Ausführungsbeispiel erfolgt die Konversion des Photostroms $i_{ph}$ in das nichtlineare Spannungssignal vor einer Signalverstärkung. Dabei wird ein dem Photostrom $i_{ph}$ proportionaler Spannungsabfall über dem Konverter 2 erzeugt und durch den Operationsverstärker 3 in seiner Ausgangsimpedanz gewandelt.

Fig. 2 zeigt, wie bereits erläutert, ein weiteres Ausführungsbeispiel mit einem Sensorelement 2, einem Operationsverstärker 3 und einem in einen Rückkopplungszweig des Operationsverstärkers 3 eingefügten Konverter 2.

Der Operationsverstärker 3 steht hier als Beispiel für eine Verstärkerschaltung, in deren Rückkopplungszweig sich der nichtlineare Konverter 2 befindet. Der Betrag des Ausgangssignals entspricht dem von der Schaltung gemäß Fig. 1, jedoch ist die Polarität des Signals umgekehrt.

Fig. 3 zeigt, wie bereits erläutert, ein weiteres Ausführungsbeispiel für die vorliegende Erfindung mit einem Sensorelement, das in sich die Funktion des Konverters aufweist und einem Operationsverstärker 3. Die Schaltung gemäß Fig. 3 arbeitet im photovoltaischen Betrieb, wobei die logarithmische Konversion des Photostroms in eine elektrische Spannung im Sensorelement selbst erfolgt.

Eine Weiterbildung der Erfindung sieht für alle der drei beschriebenen Schaltungsanordnungen vor, daß zur Vergrößerung des Signalhubes zumindest zwei Elemente mit nichtlinearer U-I-Kennlinie in Reihe geschaltet sind.

Gemäß einer anderen Weiterbildung der Erfindung ist vorgesehen, daß die Schichtfolge aus amorphem Silizium a-Si:H zwischen zwei Elektroden besteht und daß das amorphe Silizium in der Nähe einer der Elektroden $n^+$-dotiert ist. Hierbei kann zweckmäßig vorgesehen sein, daß diejenige der zwei Elektroden, die an der $n^+$-dotierten Schicht liegt, aus Titan besteht. Die andere der zwei Elektroden besteht dann zweckmäßig aus Palladium.

Gemäß einer anderen Weiterbildung der Erfindung ist vorgesehen, daß das Sensorelement 1 und der zugeordnete Konverter 2 eine körperliche Einheit bilden, wobei die photovoltaische Spannung die Signalspannung $u_s$ ist, die dem Logarithmus der einfallenden Lichtmenge L proportional ist (vergl. Fig. 3).

Die zuvor bereits beschriebene Schichtfolge kann gemäß einer weiteren Ausgestaltung der Erfindung sandwichartig das Photoelement und das Konverterelement enthalten.

Fig. 4 a, b, c, d zeigen jeweils verschiedene realisierbare Ausführungsformen für den als Logarithmierer fungierenden Konverter 2. Fig. 4 a zeigt eine Diode die in Durchlaßrichtung von dem Photostrom $i_{ph}$ durchflossen ist und die einen kristallinen oder amorphen Aufbau aufweisen kann. Fig. 4 b zeigt ein weiteres Ausführungsbeispiel, bei dem ein Bipolartransistor in Basisschaltung betrieben wird, so daß der Photostrom $i_{ph}$ aufgrund der gegebenen Kennlinie dieses Bipolartransistors logarithmiert wird.

Fig. 4 c zeigt ein weiteres Ausführungsbeispiel für das Konverterelement, wobei ein Bipolartransistor verwendet ist, der als Diode geschaltet ist.

Fig. 4 d zeigt schließlich ein Ausführungsbeispiel mit einer Serienschaltung von logarithmierenden Elementen, die beispielsweise aus mehreren Dioden gemäß Fig. 4 a bestehen können.

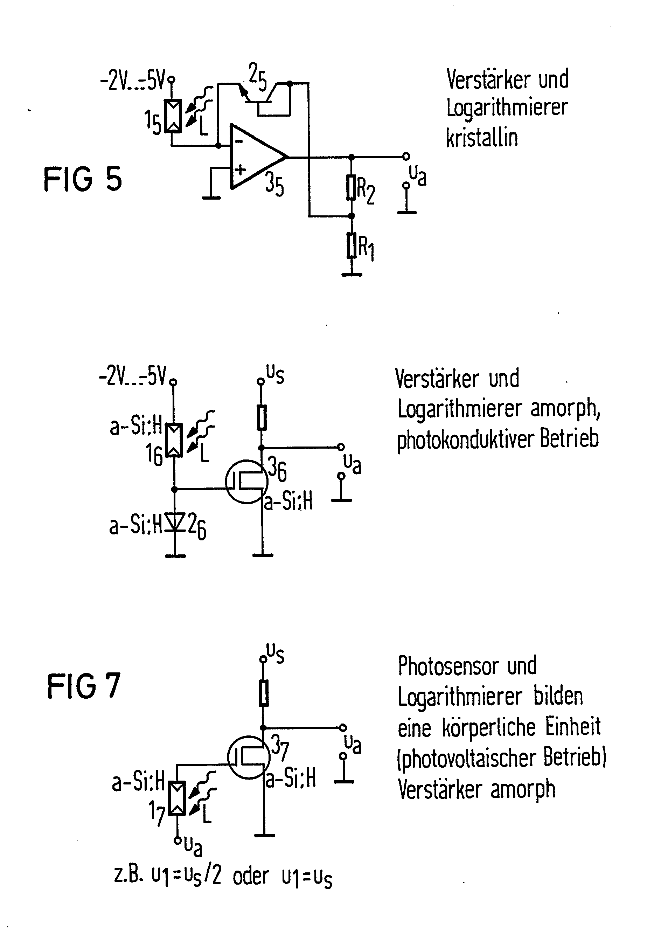

Die Figuren 5 - 7 zeigen bevorzugte Ausführungsbeispiele der erfindungsgemäßen Schaltung für je ein Sensorelement. Im einzelnen zeigen:

Fig. 5 eine Verstärkerschaltung, bei der es mit Hilfe eines einzigen Verstärkers 3 gelingt, daß das Signal am Ausgang sowohl niederohmig zur Verfügung steht als auch in seinem Pegel gegenüber dem Spannungsabfall am nichtlinearen Konverter $2_5$ angehoben wird;

Fig. 6, daß sowohl der in Form einer Diode realisierte nichtlineare Konverter $2_6$ als auch der als FET ausgeführte Verstärker $3_6$ aus amorphem Silizium a-Si:H, d.h. aus demselben Material aufgebaut ist; dies hat den Vorteil, daß Sensoren, Konverter und Verstärker in einer einheitlichen Technologie integriert hergestellt werden können;

Fig. 7 zeigt eine Schaltung, bei der der Sensor $1_7$ photovoltaisch betrieben wird, d.h. Photosensor und Logarithmierer bilden eine körperliche Einheit. Der vorgesehene Verstärker $3_7$ ist wiederum in einheitlicher Technologie zusammen mit dem Sensor $1_7$ hergestellt;

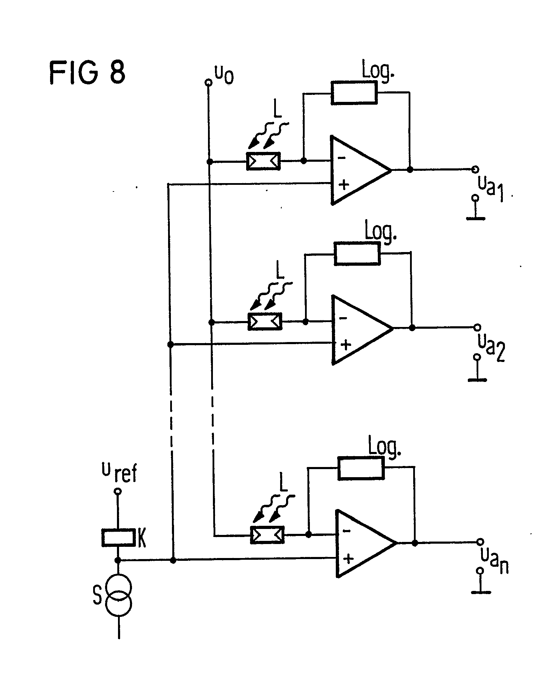

Fig. 8 zeigt eine schematische Darstellung eines bevorzugten Ausführungsbeispiels einer Sensorzeile mit erfindungsgemäßer Ausbildung der Auswerteschaltungen für die Sensorelemente, wobei die Temperaturabhängigkeit der nichtlinearen Kennlinien der Konverter in den einzelnen Auswerteschaltungen durch ein gemeinsames Kompensationsglied mit einem gleichartigen Konverter K wie in den Auswerteschaltungen für n Elemente kompensiert wird. Darüber hinaus kann durch Einstellen eines Potentials $u_{ref}$ für die n Elemente ein gemeinsamer Nullpunkt der Ausgangssignale festgelegt werden.

**Ansprüche**

1. Optische Sensorzeile aus amorphem oder polykristallinem photoelektrischem Material mit einer Vielzahl von Sensorelementen, dadurch **gekennzeichnet**, daß jedem Sensorelement (1) ein nichtlineares Element als Konverter (2) zugeordnet ist, der den der einfallenden Lichtmenge proportionalen Photostrom ($i_{ph}$) in eine Signalspannung ($u_s$) umwandelt, die zumindest näherungsweise dem Logarithmus des Photostroms ($i_{ph}$) proportional ist.

2. Optische Sensorzeile nach Anspruch 1, dadurch **gekennzeichnet**, daß die Sensorelemente aus amorphem Silizium a-Si:H hergestellt sind.

3. Optische Sensorzeile nach Anspruch 1 oder 2, dadurch **gekennzeichnet**, daß der Konverter (2) die logarithmische U-I-Kennlinie eines p-n-Überganges in einem einkristallinen Halbleitermaterial ausnutzt.

4. Optische Sensorzeile nach Anspruch 1 oder 2, dadurch **gekennzeichnet**, daß der Konverter (2) die logarithmische U-I-Kennlinie eines p-n-Überganges in einem polykristallinen Halbleitermaterial ausnutzt.

5. Optische Sensorzeile nach Anspruch 1 oder 2, dadurch **gekennzeichnet**, daß der Konverter (2) die nichtlineare U-I-Kennlinie einer Schichtfolge von einer oder mehreren Schichten aus amorphem Material und der betreffenden Elektroden ausnutzt.

6. Optische Sensorzeile nach einem der Ansprüche 1 bis 5, dadurch **gekennzeichnet**, daß die Konversion des Photostroms ($i_{ph}$) in das nichtlineare Spannungssignal vor einer Signalverstärkung durchgeführt wird.

7. Optische Sensorzeile nach einem der Ansprüche 1 bis 5, dadurch **gekennzeichnet**, daß für die Funktion des Konverters (2) außer dem Element mit nichtlinearer Kennlinie ein Verstärker (3) vorgesehen ist, der das photoelektrische Signal verstärkt, bevor die Konversion durchgeführt wird.

8. Optische Sensorzeile nach Anspruch 7, dadurch **gekennzeichnet**, daß ein dem Photostrom ($i_{ph}$) proportionaler Spannungsabfall linear vorverstärkt wird.

9. Optische Sensorzeile nach einem der Ansprüche 1 bis 5, dadurch **gekennzeichnet**, daß das Element mit der nichtlinearen Kennlinie in einem Rückkopplungszweig einer Verstärkerschaltung angeordnet ist.

10. Optische Sensorzeile nach einem der Ansprüche 1 bis 5, dadurch **gekennzeichnet**, daß das Element mit der nichtlinearen Kennlinie technologischer Bestandteil der Schaltungsstruktur eines Verstärkers ist und diesem Verstärker ein nichtlineares Verstärkungsverhalten verleiht.

11. Optische Sensorzeile nach einem der Ansprüche 1 bis 5, dadurch **gekennzeichnet**, daß zur Vergrößerung des Signalhubes zumindest zwei Elemente mit nichtlinearer U-I-Kennlinie in Reihe geschaltet sind.

12. Optische Sensorzeile nach Anspruch 5, dadurch **gekennzeichnet**, daß die Schichtfolge aus amorphem Silizium a-Si:H zwischen zwei Elektroden besteht und daß das amorphe Silizium in der Nähe einer der Elektroden $n^+$-dotiert ist.

13. Optische Sensorzeile nach Anspruch 12, dadurch **gekennzeichnet**, daß diejenige der zwei Elektroden, die an der $n^+$-dotierten Schicht liegt, aus Titan besteht.

14. Optische Sensorzeile nach Anspruch 13, dadurch **gekennzeichnet**, daß die andere der zwei Elektroden aus Palladium besteht.

15. Optische Sensorzeile nach Anspruch 6, dadurch **gekennzeichnet**, daß das Sensorelement (1) und der zugeordnete Konverter (2) eine körperliche Einheit bilden, wobei die photovoltaische Spannung die Signalspannung ($u_s$) ist, die dem Logarithmus der einfallenden Lichtmenge proportional ist.

16. Anspruch nach 5, dadurch **gekennzeichnet**, daß die Schichtfolge sandwichartig das Photoelement und das Konverterelement enthält.

17. Anspruch nach Anspruch 1, dadurch **gekennzeichnet**, daß jedem einzelnen Sensorelement oder mehreren oder allen Sensorelementen gemeinsam ein zweiter gleichartiger nichtlinearer Konverter zugeordnet ist, der die Temperaturabhängigkeit der jeweiligen Signalspannung kompensiert.

**FIG 1**

Logarithmierer in
Serie zum Photosensor

**FIG 2**

Logarithmierer im
Rückkoppelzweig

**FIG 3**

Photovoltaischer Betrieb
(Logarithmierung findet
im Sensor statt

**FIG 4**

a $i_{ph}$

Diode in Durchlaßrichtung
(kristallin oder amorph)

b $i_{ph}$

Bipolartransistor in
Basisschaltung

c $i_{ph}$

Bipolartransistor als
Diode geschaltet

d $i_{ph}$

Serienschaltung von
logarithmierenden Elementen

**FIG 5**

-2V...-5V

15  L

25

−
+  35

R2

R1

Ua

Verstärker und
Logarithmierer
kristallin

-2V...-5V

Us

a-Si:H
16  L

a-Si:H ⊻ 26

36
a-Si:H

Ua

Verstärker und
Logarithmierer amorph,
photokonduktiver Betrieb

**FIG 7**

Us

37
a-Si:H

a-Si:H
17  L

Ua

Ua

z.B. $U_1 = U_S/2$ oder $U_1 = U_S$

Photosensor und
Logarithmierer bilden
eine körperliche Einheit
(photovoltaischer Betrieb)
Verstärker amorph

FIG 8